# EUROPEAN PATENT APPLICATION

(11) **EP 3 933 390 A1**
(43) Date of publication of application: **05.01.2022**
(21) Application number: 20183818.2
(22) Date of filing: 02.07.2020
(51) Int. Cl.: G01N 23/20025, B01L 3/00

(54) **TOOL HOLDER FOR MANIPULATING SMALL OBJECTS**

(71) Applicant: Merck Patent GmbH, 64293 Darmstadt (DE)
(72) Inventor:
(74) Representative: Merck Serono S.A. Intellectual Property

(57) **Abstract**

Described herein is a tool holder for small objects. A tool and tool holder as described herein improve the flexibility and ability to manipulate small objects (such as for example crystal used in X-ray crystallography) in a confined space.

## Description

### Field of the Invention

The present invention relates to a tool holder and adaptor for a tool, which tool is used to manipulate small objects. Particularly the present invention relates to tools holders for use in manipulating crystalline material in X-ray crystallography methods such as manipulating single crystals.

### Background

X-ray single crystal structure analysis has been known as a method for determining the molecular structure of an organic compound. The molecular structure of an organic compound can be accurately determined using X-ray single crystal structure analysis when it is possible to prepare a high-quality single crystal.

Manipulation of such high-quality single crystals is typically performed using tools composed of a loop or tip attached to a small (typically 0.64 mm diameter; max. 25 mm long) steel rod. The small diameter of the rod makes usage of these tools very difficult. For easier handling, these rods can be inserted in a mechanical pencil.

The high-quality single crystals are regularly grown and stored in narrow containers. Prior to their use in X-ray crystallography analysis such high-quality single crystals have to be removed from their small container/vial. When such crystals are grown in narrow containers there is no existing tool to remove them carefully while at the same time preserving the integrity of the crystal. For example, in a method of using crystalline polynuclear metal complexes to determine the crystal structure of analytes the inclusion of analytes into such single crystals comprising a porous metal organic framework takes place in microvials for chromatography with a conical shaped bottom.

The high-quality crystalline polynuclear metal complex including an analyte remains at the bottom of the vial and may adhere to the bottom. In such circumstances it is not possible to manipulate and remove the single crystal for use in X-ray crystallographic analysis without any tool. Accordingly, there is a need for a tool holder and tool which would allow the manipulation and removal of small objects such as the crystalline polynuclear metal complex (including an analyte) in/from a narrow and confined space.

### Summary of the Invention

The current invention provides a solution to the above described problems in having a proper tool for manipulating a small object in a narrow and/or confined space. The present invention provides a holder that is able to fit a capturing element with dimensions allowing it to manipulate crystals in narrow vials and with an upper part that is easy to grasp.

In one embodiment, the present invention provides a holder for manipulating a sample, the holder comprising; a.) a capturing element on a rod-like shape for attaching or capturing the sample; b.) an adapter part having two ends, which adapter part connects to the rod-like shape at the end opposite to which the capturing element is connected, and c.) a handle part, which connects to the adapter at the other end to which the rod-like shape is connected to the adapter, the handle part being of such shape to enable manual manipulation of the holder.

### Brief Description of the Drawings

Figure 1: Shows a tool holder including a handle and adapter).
Figure 2: Shows a tool holder wherein handle and adapter are the same.

### Detailed Description of the Invention

Tools which enable the manual manipulation of a very small object such as a single crystal in a narrow and confined space are currently not available. Requirements for such tool include a capturing element to capture and manipulate the single crystal. Further the tool would need to be of sufficient flexibility to carry out the manipulations in a narrow and confined space. Moreover, on the end opposite to the capturing element the tool or tool holder has dimensions sufficiently large to enable a human to manually manipulate the tool, while at the same time the dimensions are sufficient small to use the tool in a narrow container such as a vial used for growing crystalline polynuclear metal complexes incorporating an analyte as used in X ray crystallography.

Currently available tools may have a capturing element and a rod but are not usable for manual manipulation on their own. Frequently a mechanical pencil holder could be used to insert the rod-like shape of the tool to provide a handle allowing manual manipulation of the tool and capturing single crystals. This configuration is usable when the available manipulation space is relatively large (or there is no limit to the manipulation space, for example when the object or single crystal is in an open disc). The use of the mechanical pencil results in a toll which is however is too rigid and too bulky to allow manipulation of an object (such as for example a crystalline polynuclear metal complex including an analyte) placed in a narrow container.

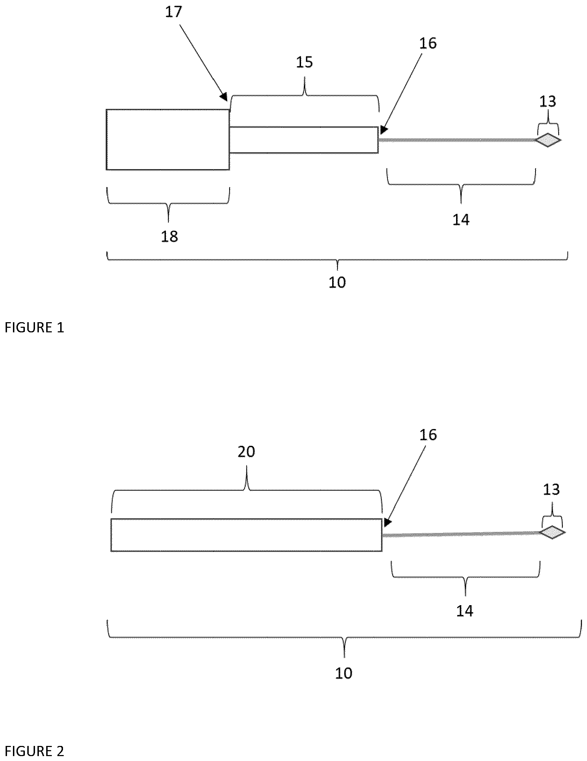

The tool of the present invention as shown in Figure 1 allows for such manipulation in narrow spaces where such previous tools and tool holders are not adequately useable. Figure 1 shows a tool or tool holder (10) which can be used for the manipulation of a small object such as for example a crystalline polynuclear metal complex including an analyte in a narrow container which may have a concave bottom. The tool or tool holder (10) comprises a capturing element (13) on a rod-like shape (14) and an adapter part (15), the adapter part having two ends (16,17) and a handle part (18). One end (16) of the adapter (15) allows for connection with the rod-like shape (14) and the capturing element (13). The other end (17) of the adapter (15) connects to the handle part (18).

In one embodiment the adapter (15) and handle part (18) are two separate elements of the tool holder. In an alternative embodiment both the handle part (18) and the adapter part (15) together form a single element (20) as shown in Figure 2.

The adapter part (15) is designed such that it can connect with the rod-like shape (14) and the capturing element (13) while having a size and diameter which allows it to be freely moveable within a confined space such as for example a narrow container. The adapter part (15) has a length of 2 cm or more, suitably between 2 and 10 cm, even more suitably between 3 and 5 cm. In addition, the adapter part (15) has a diameter such that it can easily inserted and is moveable within narrow or confined spaces such as in a narrow container. Suitably the diameter of the adapter part (15) is less than 5 mm, more suitably from 1 to 3 mm.

The one end (16) of the adapter (15) includes a means for connecting the rod-like shape (14) and capturing element (13) to the adapter part (15). This connection means includes an opening for the rod-like shape (14) for securing the rod-like shape (14) to the adapter part (15). Such securing of the rod-like shape (14) to the adapter part (15) may be a permanent securing of the two elements. However preferably the rod-like shape (14) is reversibly secured to the adapter part (15). As such the one end (16) of the adapter part (15) further includes a reversible securing means. Any securing means which is secures the rod-like shape (14) to the adapter (15) is suitable preferably those which allow for the reversible securing of the two elements. An example of a reversible securing means is a magnetic securing means wherein the rod-like shape (14) either entirely or partly is made of magnetic material which can be held in place using a magnetic securing means which magnetic force can be easily overcome by manually removing the rod-like shape (14) from the adapter part (15). A reversible securing means may also comprise a mechanical securing means for example through a button and spring mechanism.

The other end (17) of the adapter part (15) connects to the handle part (18) which has dimensions such that it allows for the manual manipulation of the entire tool or tool holder (10). The dimensions of the handle (18) part are suitably such that the adapter part (15) the handle part (18) have a combined length of at least 3 cm, more suitably at least 5 cm. In one embodiment the combined length of the handle part (18) and adapter part (15) is between 5 cm and 10 cm. As such the handle part (18) suitably has a length of at least 2 cm, more suitably a length of 2 to 5 cm. The diameter of the handle part (18) is such that it enables manual manipulation of the entire tool or tool holder (10). The diameter of the handle part (18) is suitably at least 0.1 cm, more suitably at least 0.5 cm. In one embodiment of the present invention the handle part (18) has a diameter of 0.5 to 1 cm. An embodiment of the present invention includes a handle part (18) having a length of 2 to 5 cm and a diameter of 0.5 to 1 cm.

The small objects to be captured and manipulated in a narrow space such as a narrow container can be any small object. In one embodiment the present invention is suitable for use and manipulation of a crystalline sample such as those used in X-ray crystallography. The crystalline sample can be any single crystal to be mounted on for example a goniometer for analysis through X-ray crystallography. In one embodiment the crystalline sample is a porous crystalline polynuclear metal complex. Suitably such porous crystalline polynuclear metal complex includes an analyte to be analyzed using X-ray crystallography. The use of porous crystalline polynuclear metal complexes often requires the manipulation in narrow spaces of the crystalline material as the introduction of the analyte into the porous crystalline polynuclear complex is usually carried out in small narrow containers with a concave bottom.

The porous crystalline polynuclear metal complex is most often stored and used in an organic solvent. This also includes that in the process step of introducing the analyte in such porous crystalline polynuclear complex an organic solvent is used. The capturing element (13) is used to capture or manipulate such porous crystalline polynuclear metal complex (with or without analyte). In one embodiment at least the capturing element (13) is made of such material that it is stable (does not alter its physical properties such as for example through solvation) and retains its shape when exposed to organic solvents. In one embodiment the capturing element (13) is made of a material resistant to organic solvents and does not dissolve in organic solvents.

The analysis of the analyte in a porous crystalline polynuclear metal complex through X-ray crystallography includes that the analyte and porous crystalline polynuclear metal complex are manipulated and mounted on a goniometer for X-ray crystallographic analysis. In one embodiment the capturing element (13) and possibly also the rod-like shape (14) or a part thereof are made of a material that does not interfere with the X-ray crystallographic analysis.

The capturing element can be constructed for example from a thin plastic film, which plastic can be treated to obtain the desired hydrophobicity or hydrophilicity, mechanically embossed or abraded, or coated with films (for example, of polyethylene glycol or of PDMS). The materials of which the other parts of the tool or tool holder (10) is constructed is not limited by any particular constraint. Suitably the rod-like shape (14) or both the rod-like shape (14) and the adapter element (15) (or a part of the adapter element) are made of a stiff but flexible material to increase the ease of manipulating the capturing element in the narrow confined space including the small object.

## Claims

1. A holder for manipulating a sample, the holder comprising
a. a capturing element on a rod-like shape for attaching or capturing the sample,
b. an adapter part having two ends, which adapter part connects to the rod-like shape at the end opposite to which the capturing element is connected, and
c. a handle part, which connects to the adapter at the other end to which the rod-like shape is connected to the adapter, the handle part being of such shape to enable manual manipulation of the holder.

2. The holder according to claim 1, wherein the adapter part and the handle part together form a single handling part.

3. The holder according to claim 1 or 2, wherein the adapter has a length of 2 cm or more and a diameter of 5 mm or less.

4. The holder according to claim 3, wherein the adapter has a length of 2 to 10 cm and a diameter of 1 to 3 mm.

5. The holder according to any of the preceding claims, wherein the adapter comprises a means for connecting the rod-like shape and capturing element to the adapter.

6. The holder according to claim 5, wherein the means for connecting the rod-like shape and capturing element to the adapter comprises a hole and a reversible securing means.

7. The holder according to claim 6, wherein the reversible securing means comprises magnetic material.

8. The holder according to any of the preceding claims, wherein the handle has a diameter of at least 0.1 cm, preferably at least 0.5 cm, and a length of at least 2 cm.

9. The holder according to claim 8, wherein the handle has a diameter of 0.5 to 1 cm and a length of 2 to 5 cm.

10. The holder according to any of the preceding claims, wherein the adapter part and the handle part have a combined length of at least 3 cm, preferably of at least 5 cm and even more suitably a length of 5 to 10 cm.

11. The holder according to any of the preceding claims, wherein the sample is a crystalline sample.

12. The holder according to claim 11, wherein the crystalline sample is a porous crystalline polynuclear metal complex.

13. The holder according to claim 12, wherein the capturing element is made of a material sufficiently resilient to withstand organic solvents used to introduce an analyte into a porous crystalline polynuclear metal complex.

14. The holder according to claim 13, wherein the capturing element is made of material which does not dissolve in an organic solvent used to introduce an analyte into a porous crystalline polynuclear metal complex.
